(19) Europäisches Patentamt

European Patent Office

Office européen des brevets

(11) **EP 4 624 056 A1**

(12) **EUROPEAN PATENT APPLICATION**

(43) Date of publication:
**01.10.2025 Bulletin 2025/40**

(21) Application number: **25164680.8**

(22) Date of filing: **19.03.2025**

(51) International Patent Classification (IPC):
**B05C 5/02** *(2006.01)*     **B05C 11/10** *(2006.01)*
**B05C 13/00** *(2006.01)*

(52) Cooperative Patent Classification (CPC):
**B05C 11/1039; B05C 5/0283;** B05C 5/0254;
B05C 5/027; B05C 5/0295; B05C 13/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2024 JP 2024057261**

(71) Applicant: **FUJIFILM Corporation
Tokyo 106-8620 (JP)**

(72) Inventors:
• **YAMURA, Kentaro
Minami-ashigara (JP)**
• **SAIKAWA, Tamotsu
Minami-ashigara (JP)**
• **KUNIYASU, Satoshi
Minami-ashigara (JP)**

(74) Representative: **Meissner Bolte Partnerschaft
mbB
Patentanwälte Rechtsanwälte
Postfach 86 06 24
81633 München (DE)**

(54) **COATING DEVICE**

(57) Provided is a coating device having excellent closing suppression property of a pressure reduction slit and excellent thickening suppression property of an end part in a width direction during film formation.

The coating device includes a slot die which has a jetting slit for jetting a coating liquid to a substrate to be transported, and a pressure reduction slit, in which the pressure reduction slit is positioned at an upstream side of the jetting slit from the same position of the slot die in a substrate transport direction, and at an outside in a width direction of the jetting slit.

FIG. 2

EP 4 624 056 A1

**Description**

**BACKGROUND OF THE INVENTION**

1. Field of the Invention

The present disclosure relates to a coating device.

2. Description of the Related Art

In the related art, a technique of forming a film using a die including a slit for discharging a coating liquid and a slit for reducing pressure has been known.

JP2016-43321A discloses a manufacturing method using a slot die, in which coating beads are formed between a substrate which continuously travels and a distal end of the slot die, and a manufacturing method having a reduced pressure chamber including two side plates which are arranged to face each other in a width direction of a substrate upstream of the slot die.

JP2008-155164A discloses a coating device including a coating head that has a pressure reduction chamber which is held in a pressure reduction state on an upstream side in a movement direction of an object to be coated, in which the pressure reduction chamber is divided into a plurality of chambers in a coating width direction, and the plurality of chambers can be independently adjusted in a pressure reduction degree.

JP2016-167337A discloses a coating device including a sheet transport unit which transports an electrode sheet, a coating nozzle which jets an electrode material and an insulating material toward the electrode sheet during the transport, and a gap adjustment unit which adjusts a gap between the electrode sheet during the transport and the coating nozzle, in which an electrode material jetting unit which jets an electrode material and an insulating material jetting unit which jets an insulating material are arranged side by side in a direction intersecting with a transport direction of the electrode sheet at the coating nozzle, and the gap adjustment unit simultaneously adjusts a gap between the electrode sheet during the transport and the electrode material jetting unit and a gap between the electrode sheet and the insulating material jetting unit.

**SUMMARY OF THE INVENTION**

An object to be achieved by an embodiment of the present disclosure is to provide a coating device having excellent closing suppression property of a pressure reduction slit and excellent thickening suppression property of an end part in a width direction during film formation.

The methods for achieving the above-described objects include the following aspects.

<1> A coating device comprising:

a slot die which has a jetting slit for jetting a coating liquid to a substrate to be transported, and a pressure reduction slit,
in which the pressure reduction slit is positioned at an upstream side of the jetting slit from the same position of the slot die in a substrate transport direction, and at an outside in a width direction of the jetting slit.

<2> The coating device according to <1>,
in which an opening portion of the pressure reduction slit is larger than 3 mm$^2$.
<3> The coating device according to <1> or <2>,
in which the pressure reduction slit is positioned an outside in the width direction by 5 mm or more from an end part in the width direction of the jetting slit.
<4> The coating device according to any one of <1> to <3>,
in which the coating device is for coating a substrate which is floated and transported.
<5> The coating device according to any one of <1> to <4>,
in which the coating device is for applying an aqueous coating liquid.
<6> The coating device according to any one of <1> to <5>,
in which the coating device is for forming an electrode film of a battery.

According to the present disclosure, it is possible to provide a coating device having excellent closing suppression property of a pressure reduction slit and excellent thickening suppression property of an end part in a width direction during film formation.

## BRIEF DESCRIPTION OF THE DRAWINGS

Fig. 1 is a schematic front view schematically showing a coating surface of a slot die in an example of a coating device in the related art.

Fig. 2 is a schematic perspective view schematically showing a slot die in an example of a coating device according to the present disclosure.

Fig. 3 is a schematic front view schematically showing a coating surface of a slot die 10 in the example of the coating device shown in Fig. 2.

Fig. 4 is a schematic cross-sectional view schematically showing a cross-sectional structure of a jetting slit 12 in the example of the coating device shown in Fig. 2 in a case of being viewed from a side surface direction.

Fig. 5 is a schematic front view schematically showing a coating surface of a slot die 10 in another example of the coating device according to the present disclosure.

Fig. 6 is a schematic perspective view schematically showing a slot die 10 in still another example of the coating device according to the present disclosure.

## DESCRIPTION OF THE PREFERRED EMBODIMENTS

Hereinafter, embodiments of the present disclosure will be described in detail. The present disclosure is not limited to the following embodiments. The following embodiments may be modified as appropriate within the scope of the purposes of the present disclosure.

In a case where the embodiments of the present disclosure are described with reference to the drawings, the description of overlapping constituent elements and reference numerals may be omitted in the drawings. The constituent elements indicated by the same reference numeral in the drawings mean the same constituent element. A dimensional ratio in the drawings does not necessarily represent the actual dimensional ratio.

The numerical range indicated by using "to" in the present disclosure indicates a range including numerical values described before and after "to" as a lower limit value and an upper limit value, respectively. Regarding numerical ranges that are described stepwise in the present disclosure, an upper limit value or a lower limit value described in a numerical range may be replaced with an upper limit value or a lower limit value of another stepwise numerical range. In addition, in a numerical range described in the present disclosure, an upper limit or a lower limit described in a certain numerical range may be replaced with a value described in Examples.

In the present disclosure, in a case where a plurality of substances corresponding to each component in a composition is present, the amount of each component in the composition means the total amount of the plurality of substances present in the composition, unless otherwise specified.

In the present disclosure, a term "step" denotes not only an individual step but also a step which is not clearly distinguishable from another step as long as an effect expected from the step can be achieved.

In the present disclosure, "% by mass" has the same definition as that for "% by weight", and "part by mass" has the same definition as that for "part by weight".

In the present disclosure, a combination of two or more preferred aspects is a more preferred aspect.

In the present disclosure, "solid content" means a component other than a solvent.

Coating Device

The coating device according to the present disclosure includes a slot die which has a jetting slit for jetting a coating liquid to a substrate to be transported, and a pressure reduction slit, in which the pressure reduction slit is positioned at an upstream side of the jetting slit from the same position of the slot die in a substrate transport direction, and at an outside in a width direction of the jetting slit.

It is preferable that the coating device according to the present disclosure is for applying an aqueous coating liquid.

In addition, it is preferable that the coating device according to the present disclosure is for forming an electrode film of a battery.

In a coating device including a slot die having a pressure reduction unit such as a pressure reduction slit in the related art, there is a problem in that a coating liquid is sucked by the pressure reduction slit and the pressure reduction slit is blocked, and there is a problem in that an end part in a width direction is thickened during film formation.

The coating device according to the present disclosure includes a slot die having the jetting slit and the pressure reduction slit, in which the pressure reduction slit is positioned at the upstream side of the jetting slit from the same position of the slot die in the substrate transport direction, and at the outside in the width direction of the jetting slit. Therefore, by reducing possibility of contact between the coating liquid and the pressure reduction slit, suppressing suction to the pressure reduction slit, and enabling the decompression by the pressure reduction slit to sufficiently function at the end part of the film to be formed in the width direction, it is possible to suppress thickening of the film at the end part in the width direction, and thus it is possible to provide a coating device with excellent closing suppression property of the pressure reduction slit and excellent thickening suppression property of the end part in the width direction during the film formation.

Hereinafter, the coating device according to the present disclosure will be described in detail.

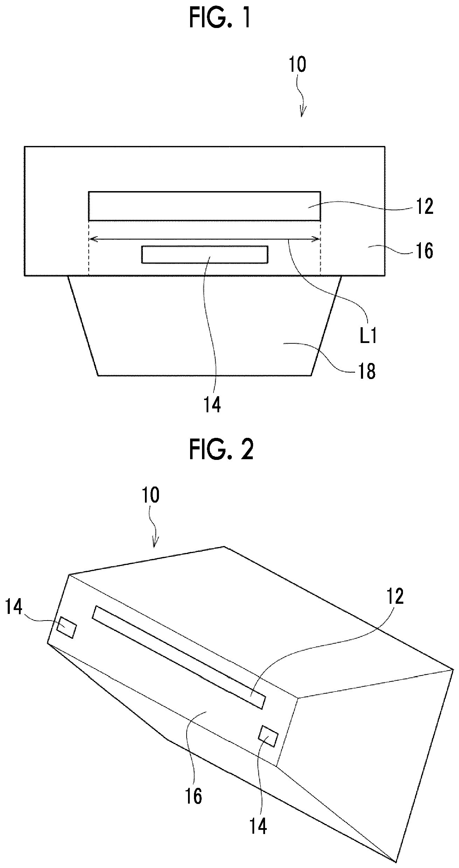

Fig. 1 is a schematic front view schematically showing a coating surface of the slot die in an example of the coating device in the related art.

A slot die 10 shown in Fig. 1 includes a jetting slit 12, a pressure reduction slit 14 provided in a lower portion of the jetting slit 12, and a waste liquid chamber 18 further provided at a lower portion of the pressure reduction slit 14.

The pressure reduction slit 14 is positioned on an upstream side of the jetting slit 12 in the transport direction. However, as described above, there is a problem in that a coating liquid (not shown) is sucked by the pressure reduction slit 14 and the pressure reduction slit 14 is closed, and there is a problem in that the coating liquid is not in a decompression state and a thickness of the end part in the width direction during film formation increases.

Fig. 2 is a schematic perspective view schematically showing a slot die in an example of the coating device according to the present disclosure.

A slot die 10 shown in Fig. 2 is provided with a jetting slit 12 and two pressure reduction slits 14 which are positioned at an upstream side of the slot die 10 in a substrate transport direction (upward direction in Fig. 2) and at an outside in a width direction of the jetting slit 12. In addition, the slot die 10 includes a slot die member 16.

In such an aspect, a possibility that a coating liquid (not shown) and the pressure reduction slit 14 come into contact with each other is reduced, and the suction of the coating liquid into the pressure reduction slit 14 is suppressed. Furthermore, since the pressure reduction by the pressure reduction slit 14 sufficiently functions at the end part of the film to be formed (not shown) in the width direction, the thickening of the end part of the film in the width direction can be suppressed, and thus the closing suppression property of the pressure reduction slit 14 and the thickening suppression property of the end part in the width direction during the film formation are excellent.

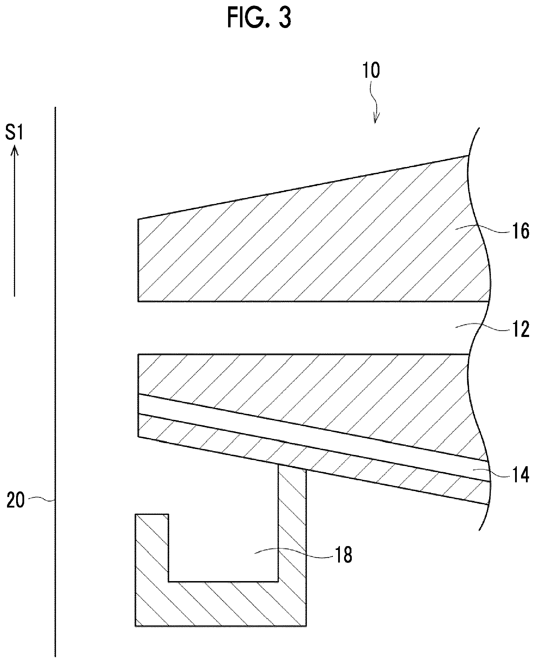

Fig. 3 is a schematic front view schematically showing a coating surface of the slot die 10 in the example of the coating device shown in Fig. 2.

Same as shown in Fig. 2, the slot die 10 shown in Fig. 3 is provided with a jetting slit 12 and two pressure reduction slit 14 which are positioned at the upstream side of the slot die 10 in the substrate transport direction (upward direction in Fig. 3) and at the outside in the width direction of the jetting slit 12, and a waste liquid chamber 18 is provided at a lower portion of the slot die 10.

In addition, in Fig. 3, L1 represents a width of the jetting slit 12; L2 represents a distance between an end part of the jetting slit 12 and an end part of the pressure reduction slit 14 in the width direction of the jetting slit 12; and L3 represents a distance between the end part of the jetting slit 12 and the end part of the pressure reduction slit 14 in a thickness direction of the jetting slit 12.

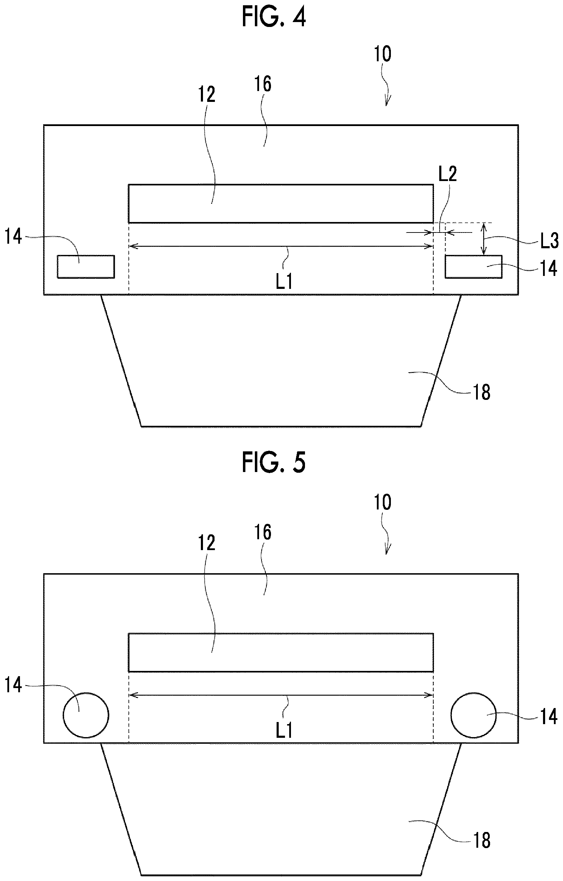

Fig. 4 is a schematic cross-sectional view schematically showing a cross-sectional structure of the jetting slit 12 in the example of the coating device shown in Fig. 2 in a case of being viewed from a side surface direction.

The slot die 10 shown in Fig. 4 is provided with a jetting slit 12 which penetrates a center portion, and two pressure reduction slits 14 which are positioned at an upstream side of the slot die 10 in a substrate transport direction S1 and at an outside in a width direction of the jetting slit 12. In Fig. 4, the position of the pressure reduction slit 14 is schematically shown.

Furthermore, a waste liquid chamber 18 for accommodating the coating liquid which has been jetted from the jetting slit and has dripped along the surface of the slot die member 16 without being applied to the substrate is provided at a lower portion of the slot die 10 shown in Fig. 4.

The coating liquid (not shown) is jetted from the jetting slit 12 and is applied to a substrate 20 transported in the substrate transport direction S1.

It is preferable that a direction of gravitational force in Fig. 4 is a direction opposite to the substrate transport direction S1.

Fig. 5 is a schematic front view schematically showing a coating surface of the slot die 10 in another example of the coating device according to the present disclosure.

A shape of an opening portion of the two positioned pressure reduction slits 14 is circular, which is different from that of Fig. 3.

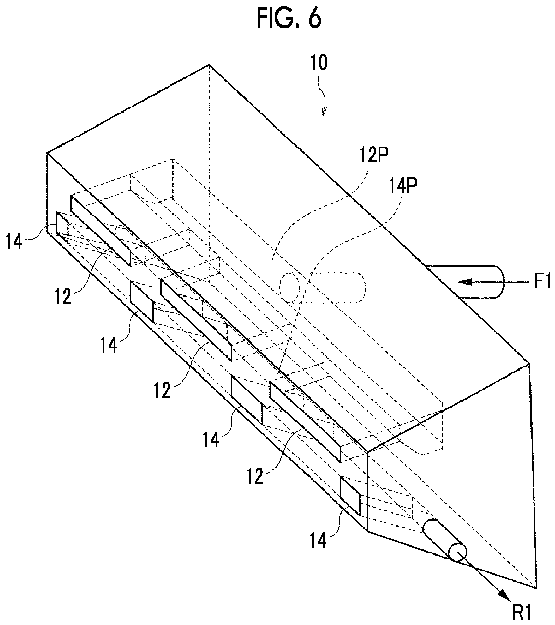

Fig. 6 is a schematic perspective view schematically showing the slot die 10 in still another example of the coating device according to the present disclosure.

The slot die 10 in Fig. 6 has three jetting slits 12, and has four pressure reduction slits 14 which are positioned at the upstream side of the slot die 10 in the substrate transport direction and at the outside in the width direction of each jetting slit 12.

In the slot die 10, the three jetting slits 12 are connected by a liquid supply path 12P, and a coating liquid (not shown) is supplied from a liquid supply unit (not shown) in a liquid supplying direction F1.

In addition, in the slot die 10, the four pressure reduction slits 14 are connected by a pressure reduction path 14P, and air is suctioned and reduced in pressure in a pressure reduction direction R1 by a pressure reduction unit (not shown) such as a pressure reducing pump.

In addition, shapes of the opening portions of the jetting slit 12 and the pressure reduction slit 14 shown in Figs. 2 to 4 and 6 are all rectangular, but the opening portion of the pressure reduction slit 14 may be circular as shown in Fig. 5, and it is needless to say that the present invention is not limited thereto.

The shape of the opening portion of the jetting slit 12 in the coating device according to the present disclosure can be appropriately selected according to a desired film shape. In addition, the L1 can also be appropriately selected according to a desired width of the film.

A length of the opening portion of the jetting slit 12 in the coating device according to the present disclosure in the thickness direction may be appropriately selected according to a solid content of the coating liquid to be used and a desired film thickness; but it is preferably 0.1 $\mu$m to 5 mm, more preferably 1 $\mu$m to 500 $\mu$m, and particularly preferably 10 $\mu$m to 200 $\mu$m.

In addition, the number of the jetting slits 12 in the coating device according to the present disclosure is not limited to one, and may be two or more, and it can be appropriately selected as desired.

The shape of the opening portion of the pressure reduction slit 14 in the coating device according to the present disclosure is not particularly limited, and may be any shape such as a polygonal shape such as a rectangular shape, a square shape, a pentagonal shape, and a hexagonal shape, a circular shape, an elliptical shape, or a cross shape.

In addition, the number of the pressure reduction slits 14 in the coating device according to the present disclosure does not need to be two, and may be one or three or more. However, it is preferable to have one pressure reduction slit 14 on each of the outsides of both ends in the width direction of the jetting slit 12, and in a case where the number of the jetting slits 12 is one, it is particularly preferable to have one pressure reduction slit 14 on each of the outsides of both ends in the width direction of the jetting slit 12.

An area of the opening portion of the pressure reduction slit 14 in the coating device according to the present disclosure is not particularly limited as long as it is possible to perform decompression, but from the viewpoint of the closing suppression property of the pressure reduction slit and the thickening suppression property of the end part in the width direction during film formation, the area is preferably more than 1 mm$^2$, more preferably more than 3 mm$^2$, still more preferably more than 3 mm$^2$ and 50 mm$^2$ or less, and particularly preferably 5 mm$^2$ or more and 30 mm$^2$ or less.

A length of the opening portion of the pressure reduction slit 14 in the coating device according to the present disclosure in the width direction is not particularly limited as long as it is possible to perform decompression, but it is preferably 1 mm to 20 mm and more preferably 2 mm to 10 mm.

A length of the opening portion of the pressure reduction slit 14 in the coating device according to the present disclosure in the thickness direction is not particularly limited as long as it is possible to perform decompression, but it is preferably 0.1 mm to 10 mm, more preferably 0.2 mm to 8 mm, and particularly preferably 0.5 mm to 5 mm.

The pressure reduction slit 14 in the coating device according to the present disclosure may be positioned on the upstream side of the slot die 10 in the substrate transport direction S1. However, from the viewpoint of the closing suppression property of the pressure reduction slit and the thickening suppression property of the end part in the width direction during film formation, the pressure reduction slit 14 is preferably positioned 1 mm or more outside the end part in the width direction of the jetting slit 12, more preferably positioned 2 mm or more outside the end part in the width direction of the jetting slit 12, still more preferably positioned 5 mm or more outside the end part in the width direction of the jetting slit 12, and particularly preferably positioned outside the end part in the width direction of the jetting slit 12 at a distance of 5 mm or more and 30 mm or less.

That is, the L2 representing the distance between the end part of the jetting slit 12 and the end part of the pressure reduction slit 14 in the width direction of the jetting slit 12 is 0 mm or more, and from the viewpoint of the closing suppression property of the pressure reduction slit and the thickening suppression property of the end part in the width direction during film formation, the L2 is preferably 1 mm or more, more preferably 2 mm or more, still more preferably 5 mm or more, and particularly preferably 5 mm or more and 30 mm or less.

The pressure reduction slit 14 in the coating device according to the present disclosure may be positioned on the upstream side from the jetting slit 12 in the thickness direction of the jetting slit 12 and in the transport direction S1 of the substrate 20. However, from the viewpoint of the closing suppression property of the pressure reduction slit and the thickening suppression property of the end part in the width direction during film formation, the pressure reduction slit 14 is preferably positioned on the upstream side in the transport direction S1 of the substrate 20; more preferably positioned on the upstream side by 1 mm or more in the transport direction S1 of the substrate 20 from the end part in the thickness direction of the jetting slit 12; still more preferably positioned on the upstream side by 2 mm or more in the transport direction S1 of the substrate 20 from the end part in the thickness direction of the jetting slit 12; and particularly preferably positioned on the upstream side by 2 mm or more and 30 mm or less in the transport direction S1 of the substrate 20 from the end part in the thickness direction of the jetting slit 12.

That is, the L3 representing the distance between the end part of the jetting slit 12 and the end part of the pressure reduction slit in the thickness direction of the jetting slit 12 is 0 mm or more, and from the viewpoint of the closing suppression property of the pressure reduction slit and the thickening suppression property of the end part in the width direction during film formation, the L3 is preferably 1 mm or more, more preferably 2 mm or more, and particularly preferably 2 mm or more and 30 mm or less.

A material of the slot die member 16 is not particularly limited, and known materials such as stainless steel, a hard alloy, ceramic, glass, and a resin can be used.

The coating device according to the present disclosure may or may not have the waste liquid chamber 18.

The waste liquid chamber 18 is a unit for collecting the coating liquid which is not applied, and a known unit can be used.

The waste liquid chamber 18 may have, for example, a shape of a receiver as shown in Fig. 4, but is not particularly limited; and the shape, size, installation position, and the like can be appropriately selected depending on the coating liquid to be used, the direction of gravitational force during coating, and the like.

The substrate 20 is not particularly limited, and may be appropriately selected as desired, and a known substrate can be used.

Examples of components of the substrate 20 include a polymer and a metal. Examples of the polymer include polyethylene terephthalate, polyethylene naphthalate, and triacetyl cellulose. The substrate may contain one or two or more kinds of polymers. Examples of the metal include iron, chromium, nickel, titanium, copper, aluminum, silver, and gold. The metal may be an alloy. Examples of the alloy include stainless steel and Invar. The substrate 20 may contain one or two or more kinds of metals. **In** a certain embodiment, the substrate 20 preferably contains the polymer, and more preferably contains at least one selected from the group consisting of polyethylene terephthalate, polyethylene naphthalate, and triacetyl cellulose. In a certain embodiment, the substrate 20 preferably contains the metal, more preferably contains at least one selected from the group consisting of nickel, titanium, copper, aluminum, silver, and gold, still more preferably contains at least one selected from the group consisting of copper and aluminum, and particularly preferably contains aluminum.

The substrate 20 is preferably a film. Examples of the film include a film containing the above-described polymer and a film containing the above-described metal. Specific examples of the film containing the polymer include a polyethylene terephthalate film, a polyethylene naphthalate film, and a triacetyl cellulose film. Specific examples of the film containing the metal include a copper film and an aluminum film.

The substrate 20 may have high thermal conductivity. Examples of the substrate having high thermal conductivity include a substrate having a thermal conductivity of 200 W/(m·K) or more. The upper limit of the thermal conductivity of the substrate 20 is not limited. The thermal conductivity of the substrate 20 may be 500 W/(m·K) or less. The thermal conductivity of the substrate is measured by a laser flash method. First, the substrate 20 is cut out at three positions in the width direction (specifically, a position 5 mm from both ends in the width direction and a center portion in the width direction) in a size of $\varphi$ 5 mm to 10 mm to obtain three measurement samples. Thermal conductivity of each measurement sample is measured using a thermal property measuring device (for example, LFA-502, KYOTO ELECTRONICS MANUFACTURING CO., LTD.) to which a laser flash method is applied. An arithmetic mean of three measured values is defined as the thermal conductivity of the substrate.

A layer structure of the substrate 20 is not limited. The substrate may have a monolayer structure or a multilayer structure.

From the viewpoint of improving productivity, the substrate 20 is preferably a long substrate. A length of the substrate 20 is preferably 10 m or more, more preferably 100 m or more, and particularly preferably 200 m or more. The upper limit of the length of the substrate 20 is not limited. The upper limit of the length of the substrate may be 1,000 m or 500 m. The length of the substrate 20 is preferably in a range of 10 m to 1,000 m. The "length of the substrate" means a distance from an end to an end of the substrate in the transport direction of the substrate.

A width of the substrate 20 is not particularly limited, but from the viewpoint of productivity and wrinkle suppression, it is preferably 100 mm to 1,800 mm, more preferably 300 mm to 1,600 mm, and particularly preferably 500 mm to 1,400 mm.

A thickness of the substrate 20 is not particularly limited, but from the viewpoint of handleability, the thickness of the substrate 20 is preferably 3 $\mu$m to 50 $\mu$m and more preferably 10 $\mu$m to 30 $\mu$m.

The substrate 20 is transported using, for example, a known transport device. The transport device may include a tension control mechanism which controls a tension of the substrate. Examples of the transport device include a transport roller and a transport belt. In addition, examples of the transport device also include a sending device which sends out the substrate and a winding device which winds the substrate. The sending device and the winding device are also used, for example, as a roll-to-roll type transport device. The roll-to-roll type transport device is preferably used as a device for transporting a long substrate.

A transportation speed of the substrate 20 is preferably in a range of 1 m/min to 100 m/min.

A tension of the substrate 20 is preferably in a range of 30 N/m to 300 N/m and more preferably in a range of 50 N/m to 200 N/m. The tension is controlled, for example, by using a known tension control device. The tension may be controlled by using a known transport device including a tension control mechanism. Examples of the transport device including a tension control mechanism include a transport device including a tendency drive roller. The tendency drive roller is rotated by, for example, a frictional force or a magnetic force acting between a rotary shaft which supports the tendency drive roller, and the tendency drive roller. The rotary shaft is rotated by, for example, a motor. That is, the force of rotating the rotary shaft is transmitted to the tendency drive roller, and the tendency drive roller is rotated. The transport device including the tendency drive roller can control the tension of the film, for example, according to the rotation speed of the rotary shaft. A technology related to the tendency drive roller is described in, for example, JP4066904B. The contents of the above-described document are incorporated in the present specification by reference. The tension may be controlled using a dancer roller. The tension may be controlled by a rotary draw control method.

It is preferable that the coating device according to the present disclosure includes a pressure reduction unit which is connected to the pressure reduction slit and reduces the pressure, and a liquid supply unit which is connected to the jetting slit and supplies the coating liquid.

The pressure reduction unit and the liquid supply unit are not particularly limited, and known units can be used. Examples of the pressure reduction unit include a vacuum pump. Examples of the liquid supply unit include a liquid feeding pump.

In addition, the coating device according to the present disclosure may include known units, members, and the like other than those described above.

For example, the coating device according to the present disclosure may include a drying unit which dries the coating liquid. Examples of the drying unit include a heating unit, a blowing unit, and a combination thereof. A temperature of gas during blowing is preferably in a range of 25°C to 200°C and more preferably in a range of 30°C to 150°C. A wind speed in the blowing is preferably 1.5 m/sec to 50 m/sec. Examples of the drying unit used for drying the coating liquid include an oven, a hot air blower, and an infrared heater.

Floating Transport

It is preferable that the coating device according to the present disclosure is for coating a substrate which is floated and transported.

It is preferable that the substrate is floated and transported above the coating device. That is, it is preferable that the substrate is transported without coming into contact with the coating device. A floating height of the substrate is determined, for example, according to coating conditions (for example, the type of the coating liquid). From the viewpoint of stabilizing the floating transport and uniformizing a film thickness distribution of the coating film, the floating height of the substrate is preferably 10 $\mu$m or more, and more preferably 20 $\mu$m or more. The lower limit of the floating height of the substrate may be 50 $\mu$m or 100 $\mu$m. From the viewpoint of preventing coating bead from being unstable due to influence of gravity, the floating height of the substrate is preferably 1,000 $\mu$m or less, more preferably 500 $\mu$m or less, and particularly preferably 400 $\mu$m or less. The floating height of the substrate is preferably in a range of 10 $\mu$m to 1,000 $\mu$m, more preferably in a range of 20 $\mu$m to 500 $\mu$m, and particularly preferably in a range of 50 $\mu$m to 400 $\mu$m. The "floating height of the substrate" means the shortest distance between a first surface of the substrate and a surface of a jetting part facing the first surface of the substrate. The floating height of the substrate is measured using a laser displacement meter according to the following procedures (1) to (3). The floating height of the substrate is measured under conditions in which the influence of the coating liquid is excluded, that is, under conditions in which the coating liquid is not applied to the substrate.

(1) a position of a surface of the jetting part of the coating device is detected using a laser displacement meter disposed to face the jetting part of the coating device, and then a position of a second surface of a substrate traveling between the jetting part of the coating device and the laser displacement meter while the substrate is floated and transported is detected.
(2) based on the measurement results obtained in (1), a distance D from the surface of the jetting part to the second surface of the floating substrate is measured.
(3) a value obtained according to the following expression is regarded as the floating height of the substrate.

$$\text{Expression: Floating height of substrate} = [\text{Distance D}] - [\text{Thickness of substrate}]$$

A degree of bending of the substrate is represented by, for example, a curvature radius. The curvature radius is smaller as the degree of bending is larger, and the curvature radius is larger as the degree of bending is smaller. From the viewpoint of uniformizing a film thickness distribution of the coating film, the curvature radius of the substrate at a contact point between the substrate and the coating liquid is preferably in a range of 50 mm to 1,000 mm, more preferably in a range of 70 mm to 600 mm, and particularly preferably in a range of 100 mm to 300 mm. The curvature radius of the substrate is measured under conditions in which the influence of the coating liquid is excluded, that is, under conditions in which the coating liquid is not applied to the substrate.

A method of floating the substrate is not limited. Examples of the method of floating the substrate include a method of supplying a gas between the substrate and the coating device. The gas supplied between the substrate and the coating device supports the substrate and causes the substrate to float from the coating device. In a case where the substrate is supported by the gas, the coating liquid can be applied to the substrate at a lower jetting pressure, and the uniformity of the film thickness distribution of the coating film is further improved.

The type of the gas is not limited. Examples of the gas include nitrogen and air. The gas is preferably air.

The gas is supplied by, for example, a known method. The gas may be supplied using a blower, a compressor, or a container (for example, a cylinder) which stores the gas.

A pressure of the gas is not limited. The pressure of the gas affects, for example, the floating height of the substrate and the degree of bending of the substrate. The floating height of the substrate increases as the pressure of the gas increases, and the floating height of the substrate decreases as the pressure of the gas decreases. In addition, the degree of bending of the substrate increases as the pressure of the gas increases, and the degree of bending of the substrate decreases as the pressure of the gas decreases. From the viewpoint of stabilizing the floating transport and curving the substrate, the pressure of the gas present in the space between the substrate and the coating device (hereinafter, may be referred to as "P0") is preferably 10 Pa or more, more preferably 50 Pa or more, and particularly preferably 100 Pa or more. The "gas present in the space between the substrate and the coating device" includes not only a gas intentionally supplied between the substrate and the coating device, but also a gas (for example, the atmosphere) present in the space between the substrate and the coating device due to an unintentional factor. Furthermore, P0 is preferably 150 Pa or more, and more preferably 200 Pa or more. As a pressure fluctuation of the gas is smaller, the uniformity of the film thickness distribution of the coating film is improved. From the viewpoint of reducing the pressure fluctuation of the gas, P0 is preferably 2,000 Pa or less, more preferably 1,600 Pa or less, and particularly preferably 1,300 Pa or less. The upper limit of P0 may be 1,000 Pa, 800 Pa, or 500 Pa. The P0 is preferably in a range of 10 Pa to 2,000 Pa, more preferably in a range of 100 Pa to 1,600 Pa, and particularly preferably in a range of 150 Pa to 1,300 Pa. The P0 is measured by inserting a metal tube connected to a manostage into the space between the substrate and the coating device.

The floating transport of the substrate preferably includes blowing the gas from a blowing part which is disposed at least one of upstream or downstream of the jetting part in the transport direction of the substrate toward the first surface of the substrate. The gas blown from the blowing part toward the first surface of the substrate supports the substrate, and causes the substrate to float from the coating device. The above-described method stabilizes the floating transport of the substrate and improves the uniformity of the film thickness distribution of the coating film. From the viewpoint of stabilizing the floating transport, it is preferable that the blowing part is disposed upstream and downstream of the jetting part in the transport direction of the substrate. The blowing part may be a part of the coating device or an element independent of the coating device. It is preferable that the blowing part is a part of the coating device. The aspect of the blowing part is described in the section of "Transporting step" described above.

It is preferable that the coating device according to the present disclosure includes a blowing part which blows the gas for floating transport. The coating device may include one or two or more blowing parts. The blowing part supplies the gas between the substrate and the coating device. The gas supplied between the substrate and the coating device supports the substrate in the coating step described later, and causes the substrate to float from the coating device. Examples of a component of the blowing part include metal. Examples of the metal include stainless steel. The structure of the blowing part is not limited as long as the blowing part has a function of blowing the gas. The blowing part may include one or two or more blowing ports. Examples of a shape of the blowing port in a plan view include a circular shape, an elliptical shape, a polygonal shape, a linear shape, and an indefinite shape. The blowing part may include a space (that is, a flow passage) in communication with an outlet and through which the gas flows. The blowing part may be a nozzle. The blowing part may be a porous body.

The coating device according to the present disclosure is a coating device which applies a coating liquid onto a substrate including a first surface which is to be transported and a second surface opposite to the first surface, and includes a jetting part which jets the coating liquid toward the first surface of the substrate, and at least one blowing part which is disposed at least one of upstream or downstream of the jetting part in a transport direction of the substrate and blows a gas toward the first surface of the substrate to float the substrate. According to the above-described embodiment, a coating device capable of forming a coating film having a uniform film thickness distribution is provided. It is preferable that the blowing part is disposed upstream and downstream of the jetting part in the transport direction of the substrate. A blowing part (hereinafter, may be referred to as "first blowing part") disposed upstream of the jetting part in the transport direction of the substrate and a blowing part (hereinafter, may be referred to as "second blowing part") disposed downstream of the jetting part in the transport direction of the substrate stabilize the floating transport of the substrate and improves the uniformity of the film thickness distribution of the coating film. The first blowing part may be adjacent to the jetting part or may not be adjacent to the jetting part. The second blowing part may be adjacent to the jetting part or may not be adjacent to the jetting part. It is preferable that the first blowing part is adjacent to the jetting part, and the second blowing part is adjacent to the jetting part.

It is preferable that the floating transport of the substrate includes blowing, toward the first surface of the substrate, a gas from the first blowing part disposed upstream of the jetting part in the transport direction of the substrate and the second blowing part disposed downstream of the jetting part, and independently controlling a pressure of the gas jetted from the first blowing part and a pressure of the gas jetted from the second blowing part. The above-described method stabilizes the floating transport of the substrate and also improves controllability of the degree of bending of the substrate. As a result, the uniformity of the film thickness distribution of the coating film is improved. A pressure (hereinafter, may be referred to as "P1") of the gas present in the space between the substrate and the first blowing part may be the same as or different from a pressure (hereinafter, may be referred to as "P2") of the gas present in the space between the substrate and the second blowing part. The "gas present in the space between the substrate and the blowing part" includes not only a gas intentionally supplied between the substrate and the blowing part, but also a gas (for example, the atmosphere) present in the space between the substrate and the blowing part due to an unintentional factor. The P1 and P2 are controlled, for example, within the range of pressure described above. From the viewpoint of uniformizing the film thickness distribution of the coating film, a ratio of P1 to P2 (that is, P1/P2) is preferably 0.1 to 1.5 and more preferably 0.3 to 1. It is preferable that P1 is lower than P2. In a case where P1 is lower than P2, the influence of the tension fluctuation of the substrate on the film thickness distribution of the coating film is small, and the uniformity of the film thickness distribution of the coating film is also improved. From the above-described viewpoint, the ratio of P1 to P2 (that is, P1/P2) is preferably 0.1 or more and less than 1, more preferably 0.3 to 0.9, and particularly preferably 0.4 to 0.8. P1 is preferably lower than P2 by 50 Pa or more, and more preferably lower than P2 by 100 Pa or more. For example, it is preferable that P1 is in a range of 10 Pa to 250 Pa and P2 is in a range of 300 Pa to 500 Pa. The P1 is measured by inserting a metal tube connected to a manostage into the space between the substrate and the first blowing part. The P2 is measured by inserting a metal tube connected to a manostage into the space between the substrate and the second blowing part.

Coating Liquid

The type of the coating liquid is not particularly limited. The type of the coating liquid is determined, for example, according to the application of the film to be obtained. The coating liquid is preferably an aqueous coating liquid. The "aqueous coating liquid" means a coating liquid in which a solvent contained in the coating liquid is substantially water. The expression "solvent contained in the coating liquid is substantially water" means that the water occupies most of the solvent contained in the coating liquid. A proportion of the water in the solvent contained in the aqueous coating liquid is preferably 90% by mass or more, more preferably 95% by mass or more, and particularly preferably 100% by mass.

Examples of the water contained in the aqueous coating liquid include natural water, purified water, distilled water, deionized water, pure water, and ultrapure water.

A content of the water in the aqueous coating liquid is preferably 40% by mass or more, and more preferably 50% by mass or more with respect to the total mass of the aqueous coating liquid. The content of the water in the aqueous coating liquid is preferably less than 100% by mass, and more preferably 80% by mass or less with respect to the total mass of the aqueous coating liquid.

The aqueous coating liquid may contain particles. Examples of the particles include inorganic particles, organic particles, and composite particles of an inorganic substance and an organic substance.

Examples of the inorganic particles include metal particles, metalloid particles, particles of a metal compound, particles of a metalloid compound, particles of an inorganic pigment, mineral particles, and polycrystalline diamond particles. Examples of the metal include an alkali metal, an alkaline earth metal, a transition metal, and an alloy thereof. Examples of the metalloid include silicon. Examples of the metal compound and the metalloid compound include an oxide, a hydroxide, and a nitride. Examples of the inorganic pigment include carbon black. Examples of the mineral include mica.

Examples of the organic particles include particles of a resin and particles of an organic pigment.

Examples of the composite particles of an inorganic substance and an organic substance include composite particles in which inorganic particles are dispersed in a matrix composed of an organic substance; composite particles in which organic particles are coated with an inorganic substance; and composite particles in which inorganic particles are coated with an organic substance.

In order to impart dispersibility, the particles may be subjected to a surface treatment. The composite particles may be formed by the surface treatment.

A particle diameter, specific gravity, and use form of the particles are not limited. The particle diameter, the specific gravity, and the use form of the particles are determined, for example, according to the coating film formed from the coating liquid, and the manufacturing conditions of the coating film.

The aqueous coating liquid may contain one kind or two or more kinds of particles.

A content of the particles in the aqueous coating liquid is not limited. The content of the particles in the aqueous coating liquid is determined, for example, according to the purpose of adding the particles, the coating film formed from the coating liquid, and the manufacturing conditions of the coating film.

Examples of the components of the aqueous coating liquid also include a binder component, a component contributing to the dispersibility of the particles, a polymerizable compound, a polymerization initiator, and a component for improving coating performance (for example, a surfactant).

A concentration of solid contents of the coating liquid is preferably less than 70% by mass, and more preferably 30% by mass to 60% by mass.

In a case of forming an electrode film of a battery, the coating liquid preferably contains an electrode active material, and more preferably contains an electrode active material and a conductive auxiliary agent.

The electrode active material is a substance capable of intercalating and deintercalating ions of a metal element belonging to Group 1 or Group 2 in the periodic table.

Examples of the electrode active material include a positive electrode active material and a negative electrode active material.

Positive Electrode Active Material

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxide having a spinel-type structure include $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound include an olivine-type iron phosphate salt (for example, $LiFePO_4$ and $Li_3Fe_2(PO_4)_3$), a pyrroline phosphate salt (for example, $LiFeP_2O_7$), a cobalt phosphate salt (for example, $LiCoPO_4$), and a monoclinic vanadium phosphate salt (for example, $Li_3V_2(PO_4)_3$ (lithium vanadium phosphate)).

Examples of the lithium-containing transition metal halogenated phosphoric acid compound include an iron fluorophosphate (for example, $Li_2FePO_4F$), a manganese fluorophosphate (for example, $Li_2MnPO_4F$), and a cobalt fluorophosphate (for example, $Li_2CoPO_4F$).

Examples of the lithium-containing transition metal silicate compound include $Li_2FeSiO_4$, $Li_2MnSiO_4$, and $Li_2CoSiO_4$.

The transition metal oxide is preferably a transition metal oxide having a bedded salt-type structure, and more preferably at least one compound selected from the group consisting of $LiCoO_2$ (lithium cobalt oxide [LCO]), $LiNi_{0.85}Co_{0.10}Al_{0.05}O_2$ (lithium nickel cobalt aluminum oxide [NCA]), and $LiNi_{1/3}Co_{1/3}Mn_{1/3}O_2$ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

One kind of the positive electrode active material may be used alone, or two or more kinds thereof may be used in combination.

In addition, even in a case of using one kind of the positive electrode active material, positive electrode active materials having different particle diameters may be used in combination.

Negative Electrode Active Material

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide ($Li_4Ti_5O_{12}$ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (manufactured by Nippon Kokuen Group).

The composition of the negative electrode active material is measured by inductively coupled plasma (ICP) emission spectroscopy.

One kind of the negative electrode active material may be used alone, or two or more kinds thereof may be used in combination.

In addition, even in a case of using one kind of the negative electrode active material, negative electrode active materials having different particle diameters may be used in combination.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

Conductive Auxiliary Agent

The conductive auxiliary agent is not particularly limited, and a known conductive auxiliary agent can be used.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

Examples

Hereinafter, the present invention will be described in detail with reference to Examples. The materials, the amounts of materials to be used, the proportions, the details of each step, or the like shown in the examples below may be modified appropriately as long as the modifications do not depart from the spirit of the present disclosure. Accordingly, the range of the present disclosure is not limited to specific examples shown below.

All "part" are based on mass.

Example 1

Preparation of Substrate AL1

As a substrate AL1, an aluminum film having a width of 220 mm, a thickness of 10 $\mu$m, a length of 300 m, and a thermal conductivity of 230 W/m·K was prepared. The substrate AL1 was wound in a roll shape to form a roll film.

Preparation of Solvent-based Coating Liquid A

Graphite (C) as a negative electrode active material, styrene butadiene rubber (SBR) as a binder, carboxymethyl cellulose (CMC) and polyvinylpyrrolidone (PVP) as a viscosity adjuster, graphite (GF) and carbon black (CB) as a conductive auxiliary agent were blended at a mass ratio of C:SBR:CMC:PVP:GF:CB = 94:2:1:1:1:1, and kneaded with deionized water to obtain a solvent-based coating liquid A having a concentration of solid contents of 60% by mass.

Preparation of Solvent-based Coating Liquid B

95 parts by mass of $LiNi_{0.5}Co_{0.2}Mn_{0.3}O_2$ (NCM523) and 2.5 parts by mass of acetylene black were mixed with each other, and 2.5 parts by mass of polyvinylidene fluoride powder (product name "PVDF5130", manufactured by Solvay Company) was added thereto little by little and kneaded with a planetary mixer. 54 parts by mass of N-methylpyrrolidone was added thereto to obtain a solvent-based coating liquid B having a concentration of solid contents of 65% by mass.

Preparation of Coating Liquid C

The following components were mixed to prepare a coating liquid C.

· Polyvinyl alcohol (CKS-50, degree of saponification: 99 mol%, degree of polymerization: 300, manufactured by Nippon Synthetic Chemical Industry Co, Ltd.): 58 parts by mass
· CELLOGEN PR (manufactured by DKS Co., Ltd.): 24 parts by mass
· Surfactant (manufactured by Nihon Emulsion Co., Ltd., EMALEX 710): 5 parts by mass
· Aqueous dispersion of ART PEARL (registered trademark) J-7P: 913 parts by mass

The aqueous dispersion of ART PEARL J-7P was prepared by the following method. 3 parts by mass of EMALEX 710 (manufactured by Nihon Emulsion Co., Ltd.; a nonionic surfactant) and 3 parts by mass of sodium carboxymethyl cellulose (manufactured by DKS Co., Ltd.) were added to 74 parts by mass of pure water. 20 parts by mass of ART PEARL J-7P (manufactured by Negami Chemical Industrial Co., Ltd.; silica composite crosslinked acrylic resin particles) was added to the obtained aqueous solution, and the mixture was dispersed at 10,000 rpm for 15 minutes using Ace Homogenizer (manufactured by Nippon Seiki Seisakusho Co., Ltd.) to obtain an aqueous dispersion of ART PEARL J-7P (particle concentration: 20% by mass). A true specific gravity of the silica composite crosslinked acrylic resin particles in the obtained aqueous dispersion was 1.20, and the average particle diameter was 6.5 $\mu$m.

Example 1

Using a coating device in which a jetting slit and a pressure reduction slit were arranged in the positional relationship shown in Figs. 2 to 4, the coating liquid A was applied onto the substrate AL1 at the positions and shapes of the pressure reduction slit shown in Table 1 and at a decompression degree of 1,000 Pa to form a coating liquid film, and the formed coating liquid film was dried to obtain a coating film.

Specifically, the aqueous coating liquid A was applied onto a continuously transported substrate such that a width of a coated portion was 200 mm and a width of an uncoated portion between the end part of the substrate and the coated portion was 10 mm.

A transportation speed of the substrate was set to 2.0 m/min.

In this manner, a coating film having a film thickness of 70 $\mu$m was formed.

Examples 2 to 10 and Comparative Examples 1, 3, and 4

A coating film was formed in the same manner as in Example 1, except that the pressure reducing method, the position and shape of the pressure reduction slit, and the coating liquid were changed as shown in Table 1.

In Example 4, a coating device configured as shown in Fig. 5 was used.

Example 11

A coating film was formed in the same manner as in Example 1, except that the substrate AL1 was floated and transported by a device described in Example 1 of WO2022/130902A and coated by the same coating device as in Example 5. Productivity of the coating film was doubled as compared with Example 5. In the case of the normal coating as in Example 5, it was necessary to perform the step twice in order to coat the front and back surfaces, whereas in the case of the floating coating as in Example 11, the front and back surfaces could be coated and dried at the same time, and thus it was sufficient to perform the step only once. That is, the productivity was doubled.

Comparative Example 2

A coating film was formed in the same manner as in Example 1, except that a coating device described in Figs. 1 to 3 of JP2008-155164A was used.

Evaluation of Thickening Suppression Property of End Part in Width Direction during Film Formation (End Part Thickness Increase Suppression Property)

A widthwise profile of the film thickness was measured, and a difference between the maximum value and the minimum value at the end part in the width direction of 5 mm was used as an index of thickening of the film. The extent to which this difference was reduced by the decompression was evaluated. The measurement of the widthwise profile of the film thickness is not particularly limited, and for example, a continuous thickness measuring instrument FT-A-200 manufactured by Fujiwork Co., Ltd. can be suitably used. The evaluation standard was as follows.

A: difference between the maximum value and the minimum value was reduced by 80% or more by the decompression.

B: difference between the maximum value and the minimum value was reduced by 30% or more and less than 80% by the decompression.

C: difference between the maximum value and the minimum value was 3 $\mu$m or more, and the difference between the maximum value and the minimum value was reduced by less than 30%.

Evaluation of Necessity of Large-scale Equipment

The evaluation was performed based on whether or not the auxiliary facilities other than the slot die required for coating were necessary. Specifically, in order to uniformly reduce the pressure in the entire width direction, pressure reduction devices used in JP2016-43321A, JP2008-155164A, and the like requires a pressure reducing chamber which is equal to or larger than the substrate width and is large to some extent on the upstream side in the substrate flow direction (= F: necessary). On the other hand, in a case of reducing the pressure in the slit at a die lip tip, the large pressure reducing chamber is not necessary (A: not necessary).

Evaluation of Closing Suppression Property of Pressure Reduction Slit

After the coating was completed, the slot die was disassembled, and a degree to which the coating liquid and the dried product thereof were attached to the pressure reduction slit 14 was visually evaluated. The evaluation standard was as follows.

A: coating liquid and the dried product thereof were not attached to the pressure reduction slit and the pressure reduction path.

B: coating liquid and the dried product thereof were attached to the pressure reduction slit and the pressure reduction path, but were not attached to the opening portion of the pressure reduction slit.

C: coating liquid and the dried product thereof were attached to the pressure reduction slit and the pressure reduction path, and the opening portion of the pressure reduction slit was closed by 0% to 30%.

D: coating liquid and the dried product thereof were attached to the pressure reduction slit and the pressure reduction path, and the opening portion of the pressure reduction slit was closed by 30% or more.

The evaluation results are summarized in Table 1.

Table 1

| | Pressure reducing method | Pressure reduction slit | | | | | | Coating liquid | Support transporting method | Evaluation | | | |
| | | Position in width direction | Shape of opening portion | Width | Length | Area | Decompression degree | Type | | End part thickness increase suppression property | Necessity of large-scale equipment | Closing suppression property of pressure reduction slit | Productivity |
|---|---|---|---|---|---|---|---|---|---|---|---|---|---|
| Comparative Example 1 | - | - | - | - | - | | | - | Normal | C | - | - | - |
| Comparative Example 2 | Known chamber method | Overall width of lower por-tion of jet-ting slit | - | Overall width | - | - | 1000 Pa | Coating liquid A | Normal | B | F: necessary | - | - |
| Comparative Example 3 | Direct-slit method | Overall width of lower por-tion of jet-ting slit | Rectangular | Overall width | 0.6 mm | - | 1000 Pa | Coating liquid A | Normal | A | A: not necessary | D | - |
| Comparative Example 4 | Direct-slit method | Each position from 0 mm to +10 mm from both ends of jetting slit in width direction | Rectangular | 10 mm | 0.6 mm | 6 $mm^2$ | 1000 Pa | Coating liquid A | Normal | A | A: not necessary | D | - |
| Example 1 | Direct-slit method | Each position from 0 mm to -5 mm from both ends of jetting slit in width direction | Rectangular | 5 mm | 0.6 mm | 3 $mm^2$ | 1000 Pa | Coating liquid A | Normal | A | A: not ne-cessary | C | - |

(continued)

| | Pressure reduction slit | | | | | | | Coating liquid | Support transporting method | Evaluation | | | |
| | Pressure reducing method | Position in width direction | Shape of opening portion | Width | Length | Area | Decompression degree | Type | | End part thickness increase suppression property | Necessity of large-scale equipment | Closing suppression property of pressure reduction slit | Productivity |
|---|---|---|---|---|---|---|---|---|---|---|---|---|---|
| Example 2 | Direct-slit method | Each position from 0 mm to -10 mm from both ends of jetting slit in width direction | Rectangular | 10 mm | 0.6 mm | 6 mm² | 1000 Pa | Coating liquid A | Normal | A | A: not necessary | B | - |
| Example 3 | Direct-slit method | Each position from -5 mm to -10 mm from both ends of jetting slit in width direction | Rectangular | 5 mm | 0.6 mm | 3 mm² | 1000 Pa | Coating liquid A | Normal | A | A: not necessary | B | - |
| Example 4 | Direct-slit method | Each position from -5 mm to -8 mm from both ends of jetting slit in width direction | Circular | Φ3 mm | | 7 mm² | 1000 Pa | Coating liquid A | Normal | A | A: not necessary | B | - |

| | Pressure reducing method | Pressure reduction slit | | | | | | Coating liquid | Support transporting method | Evaluation | | | |
|---|---|---|---|---|---|---|---|---|---|---|---|---|---|
| | | Position in width direction | Shape of opening portion | Width | Length | Area | Decompression degree | Type | | End part thickness increase suppression property | Necessity of large-scale equipment | Closing suppression property of pressure reduction slit | Productivity |
| Example 5 | Direct-slit method | Each position from -5 mm to -15 mm from both ends of jetting slit in width direction | Rectangular | 10 mm | 2 mm | 20 mm$^2$ | 1000 Pa | Coating liquid A | Normal | A | A: not necessary | A | - |
| Example 6 | Direct-slit method | Each position from -5 mm to -15 mm from both ends of jetting slit in width direction | Rectangular | 10 mm | 2 mm | 20 mm$^2$ | 500 Pa | Coating liquid A | Normal | A | A: not necessary | A | - |
| Example 7 | Direct-slit method | Each position from -5 mm to -15 mm from both ends of jetting slit in width direction | Rectangular | 10 mm | 2 mm | 20 mm$^2$ | 2000 Pa | Coating liquid A | Normal | A | A: not necessary | A | - |

EP 4 624 056 A1

17

| | Pressure reducing method | Pressure reduction slit | | | | | | Coating liquid | Support transporting method | Evaluation | | | |
| | | Position in width direction | Shape of opening portion | Width | Length | Area | Decompression degree | Type | | End part thickness increase suppression property | Necessity of large-scale equipment | Closing suppression property of pressure reduction slit | Productivity |
|---|---|---|---|---|---|---|---|---|---|---|---|---|---|
| Example 8 | Direct-slit method | Each position from -5 mm to -15 mm from both ends of jetting slit in width direction | Rectangular | 10 mm | 2 mm | 20 mm$^2$ | 3000 Pa | Coating liquid A | Normal | A | A: not necessary | A | - |
| Example 9 | Direct-slit method | Each position from -5 mm to -15 mm from both ends of jetting slit in width direction | Rectangular | 10 mm | 2 mm | 20 mm$^2$ | 1000 Pa | Coating liquid B | Normal | A | A: not necessary | A | - |
| Example 10 | Direct-slit method | Each position from -5 mm to -15 mm from both ends of jetting slit in width direction | Rectangular | 10 mm | 2 mm | 20 mm$^2$ | 1000 Pa | Coating liquid C | Normal | A | A: not necessary | A | - |

EP 4 624 056 A1

(continued)

| | Pressure reducing method | Pressure reduction slit | | | | | | Coating liquid | Support transporting method | Evaluation | | | |
|---|---|---|---|---|---|---|---|---|---|---|---|---|---|
| | | Position in width direction | Shape of opening portion | Width | Length | Area | Decompression degree | Type | | End part thickness increase suppression property | Necessity of large-scale equipment | Closing suppression property of pressure reduction slit | Productivity |
| Example 11 | Direct-slit method | Each position from -5 mm to -15 mm from both ends of jetting slit in width direction | Rectangular | 10 mm | 2 mm | 20 mm² | 1000 Pa | Coating liquid A | Floating | A | A: not necessary | A | Two times |

In Table 1, positive and negative signs with regard to the position of the pressure reduction slit were defined as positive inside and negative outside from the end part in the width direction of the jetting slit.

In addition, in Examples 1 to 11 and Comparative Examples 3 and 4, the position of the pressure reduction slit in the thickness direction was set such that the end part of the pressure reduction slit closest to the jetting slit in the thickness direction was at a position of 5 mm on the upstream side in the substrate transport direction from the end part of the jetting slit in the thickness direction.

The existing chamber method in Table 1 is a decompression method in which a decompression chamber (= chamber) having a size equal to or larger than the substrate width is provided on the upstream side in the substrate flow direction, and a decompression chamber which is somewhat large and generates uniform pulling and pressing is provided in order to uniformly decompress the entire width direction; and the direct-slit method is a decompression method in which a slit is provided near the die lip tip (directly below the slit) to decompress.

As shown in Table 1, the coating devices of Examples 1 to 11, which were the coating device according to the present disclosure, were excellent in the closing suppression property of the pressure reduction slit and the thickening suppression property of the end part in the width direction during film formation, as compared with the coating devices of Comparative Examples 1 to 4.

Explanation of References

        10: slot die
        12: jetting slit
        14: pressure reduction slit
        16: slot die member
        18: waste liquid chamber
        20: substrate
        L1: width of j etting slit 12
        L2: distance between end part of jetting slit 12 and pressure reduction slit in width direction of jetting slit 12
        L3: distance between end part of jetting slit 12 and pressure reduction slit in thickness direction of jetting slit 12
        12P: liquid supply path
        14P: pressure reduction path
        F1: liquid supplying direction
        R1: pressure reduction direction
        S1: substrate transport direction

**Claims**

1. A coating device comprising:

        a slot die which has a jetting slit for jetting a coating liquid to a substrate to be transported, and a pressure reduction slit,
        wherein the pressure reduction slit is positioned at an upstream side of the jetting slit from the same position of the slot die in a substrate transport direction, and at an outside in a width direction of the jetting slit.

2. The coating device according to claim 1,
   wherein an opening portion of the pressure reduction slit is larger than 3 mm$^2$.

3. The coating device according to claim 1 or 2,
   wherein the pressure reduction slit is positioned an outside in the width direction by 5 mm or more from an end part in the width direction of the jetting slit.

4. The coating device according to any one of claims 1 to 3,
   wherein the coating device is for coating a substrate which is floated and transported.

5. The coating device according to any one of claims 1 to 4,
   wherein the coating device is for applying an aqueous coating liquid.

6. The coating device according to any one of claims 1 to 5
   wherein the coating device is for forming an electrode film of a battery.

## FIG. 1

## FIG. 2

# FIG. 3

## FIG. 4

## FIG. 5

# FIG. 6

Europäisches
Patentamt

European
Patent Office

Office européen
des brevets

# EUROPEAN SEARCH REPORT

**Application Number**

EP 25 16 4680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2013 0092648 A (LEE IN YOUNG [KR]) 21 August 2013 (2013-08-21) * figure 7 * * paragraph [0036] - paragraph [0041] * ----- | 1-6 | INV. B05C5/02 B05C11/10 ADD. B05C13/00 |
| A | CN 112 474 191 B (SHENZHEN MANST TECH CO LTD) 9 November 2021 (2021-11-09) * paragraph [0042] - paragraph [0044] * * figure 9 * ----- | 1-6 | |
| A | CN 115 502 032 A (QUZHOU XIANNA NEW ENERGY TECH CO LTD) 23 December 2022 (2022-12-23) * paragraph [0027] * * paragraph [0029] - paragraph [0030] * * figure 3 * ----- | 1-6 | |

TECHNICAL FIELDS
SEARCHED        (IPC)

B05C

The present search report has been drawn up for all claims

| Place of search | Date of completion of the search | Examiner |
|---|---|---|
| The Hague | 23 July 2025 | Roldán Abalos, Jaime |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 4680

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| KR 20130092648 A | 21-08-2013 | NONE | |
| CN 112474191 B | 09-11-2021 | NONE | |
| CN 115502032 A | 23-12-2022 | NONE | |

EPO FORM P0459

For more details about this annex : see Official Journal of the European Patent Office, No. 12/82

**EP 4 624 056 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016043321 A
- JP 2008155164 A
- JP 2016167337 A
- JP 4066904 B
- WO 2022130902 A